# EUROPEAN PATENT APPLICATION

(11) **EP 4 683 141 A1**
(43) Date of publication of application: **21.01.2026**
(21) Application number: 23937296.4
(22) Date of filing: 06.12.2023
(51) Int. Cl.: H02G 3/16, H02K 5/22, F04B 39/00

(54) **JUNCTION BOX AND COMPRESSOR**

(30) Priority: 16.05.2023 CN 202310548021
(71) Applicant: Nanchang Highly Electrical Appliances Co., Ltd., Nanchang, Jiangxi 330013 (CN); Shanghai Highly Electrical Appliances Co., Ltd., Shanghai 201206 (CN)
(72) Inventor: XU, Shenping, Nanchang, Jiangxi 330013 (CN); WU, Lihua, Nanchang, Jiangxi 330013 (CN)
(74) Representative: Zacco Sweden AB
(86) International application number: PCT/CN2023/136807
(87) International publication number: WO 2024/234625

(57) **Abstract**

Provided are a junction box and a compressor. The junction box (1) includes a base plate (10) and a cover (11). The base plate (10) includes a base plate body (101), two first connection portions (102) protruding from an upper surface of the base plate body (101) and located at two ends of the base plate body (101) in a first direction, and two limiting portions (103) protruding from the upper surface of the base plate body (101) and located at two ends of the base plate body (101) in a second direction. The two limiting portions (103) are spaced apart from the two first connection portions (102). The base plate body (101) is provided with a through hole (104) configured to receive a terminal post (2). The cover (11) includes a housing (111) and two second connection portions (112). The housing (111) includes two first side walls (113) and two second side walls (114). The two second connection portions (112) are disposed on the two first side walls (113), respectively. Each first connection portion (102) is connected to a corresponding second connection portion (112).

## Description

### TECHNICAL FIELD

The present application relates to the technical field of electrical equipment, for example, to a junction box and a compressor.

### BACKGROUND

In electrical engineering, a junction box is an important auxiliary component. Since wires need to pass through conduits, a junction box is disposed at a joint portion of the wires and connected to the conduit to connect and protect the wires.

For example, Chinese patent publication No. CN205647151U discloses a junction box that includes a base and a cover. The base includes an accommodating groove formed by a bottom plate and side plates. A protruding limiting member is disposed on an outer wall surface of the side plate. The upper surface of the limiting member is lower than an upper end surface of the side plate. A sealing ring is disposed at an opening of the accommodating groove. An edge of the cover is fixedly connected to the limiting member, and an inner wall surface of the cover presses tightly against the sealing ring.

However, the preceding solution has the following technical problem: The joint portion of the wires is disposed in the accommodating groove of the base, and when the joint portion is operated, due to the restriction of the side plates, it is difficult for an operator's hand to reach into the accommodating groove, resulting in inconvenient operation.

### SUMMARY

The present application provides a junction box and a compressor to facilitate an operator to operate on a joint portion of wires.

The present application provides a junction box. The junction box includes a base plate and a cover.

The base plate includes a base plate body, two first connection portions protruding from an upper surface of the base plate body and located at two ends of the base plate body in a first direction, and two limiting portions protruding from the upper surface of the base plate body and located at two ends of the base plate body in a second direction. The two limiting portions are spaced apart from the two first connection portions. The base plate body is provided with a through hole configured to receive a terminal post.

The cover includes a housing and two second connection portions. The housing includes two first side walls arranged in parallel and spaced apart along the first direction and two second side walls arranged in parallel and spaced apart along the second direction. The two second connection portions are disposed on the two first side walls, respectively. The two first side walls are located between the two first connection portions. The two second side walls are located between the two limiting portions. The two first connection portions are arranged in a one-to-one correspondence with the two second connection portions, and each first connection portion is connected to a corresponding second connection portion. The first direction and the second direction are arranged at an angle to each other.

Optionally, the junction box also includes a sealing member disposed between the base plate body and the housing.

Optionally, the sealing member includes a sealing ring and an annular protrusion disposed on an inner edge of the sealing ring, the sealing ring is clamped between the housing and the base plate body, and the housing is sleeved on the annular protrusion and fits closely with the annular protrusion.

Optionally, one of a limiting portion and a second side wall is provided with a slot, the other of the limiting portion and the second side wall is provided with a protrusion, and the slot engages with the protrusion.

Optionally, the first connection portion includes a vertical plate and a horizontal plate, the vertical plate is disposed on the upper surface of the base plate body and is connected between the horizontal plate and the base plate body, the two first side walls are located between two vertical plates of the two first connection portions, and the two second connection portions are connected to two horizontal plates of the two first connection portions in a one-to-one correspondence.

Optionally, the height of a limiting portion is less than the height of the terminal post, and the height of the first connection portion is less than the height of the limiting portion.

Optionally, the two limiting portions are each provided with a guide surface, and two guide surfaces of the two limiting portions are configured to guide the two second side walls to enter between the two limiting portions, respectively.

Optionally, one of the two first side walls is configured to be connected with a cable connector.

Optionally, the second connection portion is provided with a clearance groove, and a portion of the cable connector is located in the clearance groove.

The present application provides a compressor. The compressor includes a compressor body and the junction box according to any one of the preceding solutions. The compressor body is provided with a terminal post, and the junction box is disposed on the compressor body and is configured to seal the terminal post.

### BRIEF DESCRIPTION OF DRAWINGS

FIG. 1 is a view illustrating the structure of a junction box according to the present application.
FIG. 2 is a view illustrating the structure of a base plate of a junction box according to the present application.
FIG. 3 is a view illustrating the structure of a cover of a junction box according to the present application.
FIG. 4 is a view illustrating the structure of a sealing member of a junction box according to the present application.
FIG. 5 is a sectional view of a junction box according to the present application.
FIG. 6 is a view illustrating the structure of a cable connector of a junction box according to the present application.
FIG. 7 is a structural diagram of a base plate assembled with a compressor according to the present application.

### Reference list

- 1: junction box
- 10: base plate
- 101: base plate body
- 102: first connection portion
- 103: limiting portion
- 104: through hole
- 105: slot
- 106: guide surface
- 11: cover
- 111: housing
- 112: second connection portion
- 113: first side wall
- 114: second side wall
- 115: protrusion
- 116: clearance groove
- 12: sealing member
- 121: sealing ring
- 122: annular protrusion
- 1021: vertical plate
- 1022: horizontal plate
- 2: terminal post
- 3: cable connector
- 4: compressor body

### DETAILED DESCRIPTION

Hereinafter the present application is described in conjunction with drawings and embodiments. It is to be understood that the embodiments described herein are only intended to illustrate the present application and not to limit the present application. In addition, for ease of description, only part, not all, of structures related to the present application are illustrated in the drawings.

In the description of the present application, unless otherwise expressly specified and limited, a term "connected to each other", "connected", or "secured" is to be construed in a broad sense, for example, as securely connected, detachably connected, or integrated; mechanically connected or electrically connected; directly connected to each other or indirectly connected to each other via an intermediary; or internally connected between two components or interaction relations between two components. For those of ordinary skill in the art, specific meanings of the preceding terms in the present application may be construed according to specific situations.

In the present application, unless otherwise expressly specified and limited, when a first feature is described as "above" or "below" a second feature, the first feature and the second feature may be in direct contact or be in contact via another feature between the two features instead of being in direct contact. Moreover, when the first feature is "on", "above", or "over" the second feature, the first feature is right on, above, or over the second feature, or the first feature is obliquely on, above, or over the second feature, or the first feature is simply at a higher level than the second feature. When the first feature is "under", "below", or "underneath" the second feature, the first feature is right under, below, or underneath the second feature, or the first feature is obliquely under, below, or underneath the second feature, or the first feature is simply at a lower level than the second feature.

In the description of the embodiments, it is to be noted that orientations or position relations indicated by terms such as "above", "below", "left", and "right" are based on the drawings. These orientations or position relations are intended only to facilitate the description and simplify an operation and not to indicate or imply that a device or element referred to must have such particular orientations or must be configured or operated in such particular orientations. Thus, these orientations or position relations are not to be construed as limiting the present application. In addition, terms "first" and "second" are used only to distinguish between descriptions and have no special meaning.

The present application provides a junction box 1. The junction box 1, which is an important component in an electrical wiring system, is capable of effectively accommodating and sealing a terminal post 2 and wires.

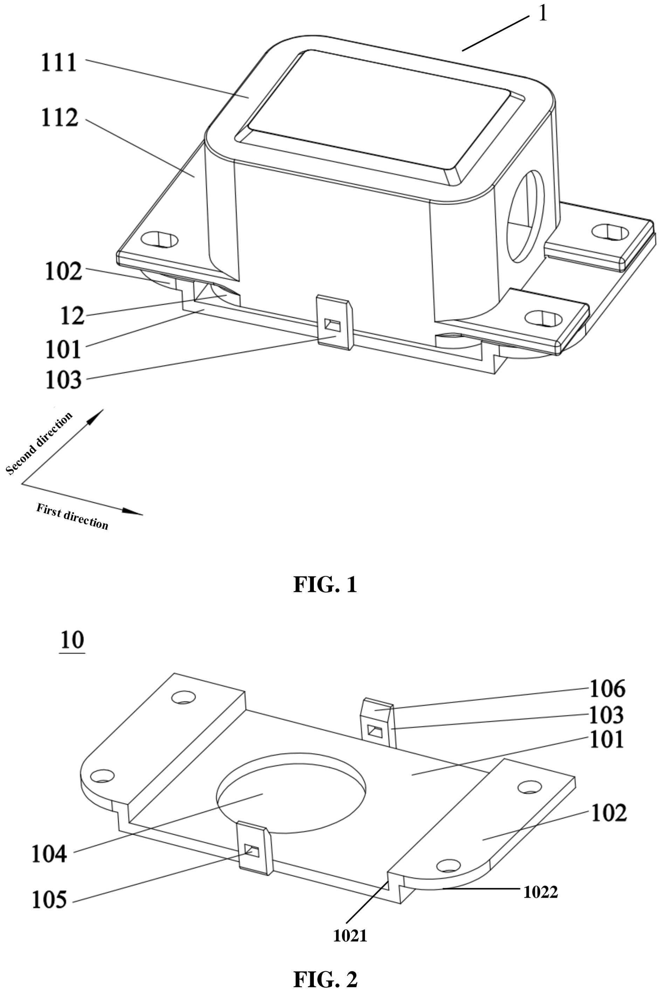

As shown in FIG. 1 to FIG. 7, the junction box 1 includes a base plate 10 and a cover 11; the base plate 10 includes a base plate body 101, two first connection portions 102 protruding from an upper surface of the base plate body 101 and located at two ends of the base plate body 101 in a first direction, and two limiting portions 103 protruding from the upper surface of the base plate body 101 and located at two ends of the base plate body 101 in a second direction, the two limiting portions 103 are spaced apart from the two first connection portions 102, and the base plate body 101 is provided with a through hole 104 configured to receive a terminal post 2; the cover 11 includes a housing 111 and two second connection portions 112, and the housing 111 includes two first side walls 113 arranged in parallel and spaced apart along the first direction and two second side walls 114 arranged in parallel and spaced apart along the second direction; the two second connection portions 112 are disposed on the two first side walls 113, respectively, the two first side walls 113 are located between the two first connection portions 102, and the two second side walls 114 are located between the two limiting portions 103; the two first connection portions 102 are arranged in a one-to-one correspondence with the two second connection portions 112, and each first connection portion 102 is connected to a corresponding second connection portion 112; the first direction and the second direction are arranged at an angle to each other. By the arrangement of the junction box 1 at the position of the terminal post 2, water, dust, and other impurities can be effectively prevented from entering the terminal post 2, which otherwise lead to reduced insulation performance, leakage, short-circuit sparking, and other phenomena at the connection. The two limiting portions 103 are apart from the two first connection portions 102 so that an operator can conveniently operate on the terminal post 2 through a gap between the limiting portions 103 and the first connection portions 102. In this embodiment, a threaded hole is disposed on the first connection portion 102, and a bolt may be used to fixedly connect the first connection portion 102 and the second connection portion 112.

In this embodiment, the base plate 10 is an iron plate with a thickness ranging from 1.0 mm to 5.0 mm. The base plate body 101 is provided with one or multiple through holes 104, and the shape of the through holes may be circular, square, or diamond-shaped. The number and shape of the through holes 104 are specifically configured based on the terminal post 2.

Optionally, the size of the cover 11 is adapted to the base plate 10, and the thickness of the cover 11 may range from 0.5 mm to 4.0 mm. The material of the cover 11 may be plastic or metal, for example, a polybutylene terephthalate (PBT) plastic material.

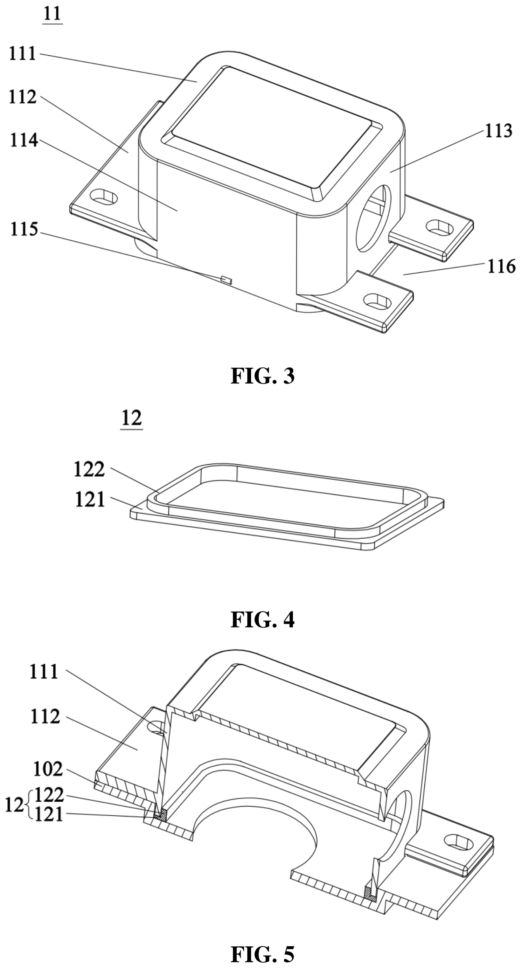

With reference to FIG. 4 and FIG. 5, the junction box 1 also includes a sealing member 12 disposed between the base plate body 101 and the housing 111. By the arrangement of the sealing member 12, the sealing performance between the base plate 10 and the cover 11 can be significantly improved, enabling the junction box 1 to achieve dustproof and waterproof performance up to an Ingress Protection (IP) rating of IP67. The size of the sealing member 12 is adapted to the base plate body 101, and the thickness of the sealing member 12 ranges from 1.0 mm to 4.0 mm. Optionally, the sealing member 12 is a rubber gasket, and the material thereof may be a rubber material such as ethylene propylene diene monomer (EPDM) rubber, silicone, nitrile rubber, polyethylene (PE) foam, or polyurethane foam.

With continued reference to FIG. 4 and FIG. 5, the sealing member 12 includes a sealing ring 121 and an annular protrusion 122 disposed on an inner edge of the sealing ring 121, the sealing ring 121 is clamped between the housing 111 and the base plate body 101, and the housing 111 is sleeved on the annular protrusion 122 and fits closely with the annular protrusion 122. The sealing ring 121 is disposed on the base plate body 101 and adapted to the shape of the base plate body 101. The sealing member 12, under the action of the housing 111 and the base plate body 101, fits closely with the housing 111 and the base plate body 101, ensuring no gap at the connection between the base plate 10 and the cover 11. To further enhance sealing performance, a sealant may also be used at the connection between the base plate body 101 and the housing 111.

With reference to FIG. 1 to FIG. 3, one of the limiting portion 103 and the second side wall 114 is provided with a slot 105, the other of the limiting portion 103 and the second side wall 114 is provided with a protrusion 115, and the slot 105 engages with the protrusion 115. In this embodiment, the limiting portion 103 is provided with a slot 105, and the second side wall 114 is provided with a corresponding protrusion 115. Through engagement of the slot 105 with the protrusion 115, the connection strength between the base plate 10 and the cover 11 can be further enhanced.

With reference to FIG. 1 and FIG. 2, the first connection portion 102 includes a vertical plate 1021 and a horizontal plate 1022, the vertical plate 1021 is disposed on the upper surface of the base plate body 101 and is connected between the horizontal plate 1022 and the base plate body 101, the two first side walls 113 are located between two vertical plates 1021 of the two first connection portions 102, and the two second connection portions 112 are connected to two horizontal plates 1022 of the two first connection portions 102 in a one-to-one correspondence. In this embodiment, a threaded hole is disposed on the horizontal plate 1022 of the first connection portion 102, and a bolt is used to fix the horizontal plate 1022 of the first connection portion 102 to the second connection portion 112.

With reference to FIG. 1 and FIG. 2, the height of the limiting portion 103 is less than the height of the terminal post 2, and the height of the first connection portion 102 is less than the height of the limiting portion 103. Through the height arrangement of the first connection portion 102, the limiting portion 103, and the terminal post 2, an operator can handle the terminal post 2 more conveniently.

With reference to FIG. 1 and FIG. 2, the limiting portion 103 is provided with a guide surface 106, and the guide surfaces 106 of the two limiting portions 103 are configured to guide the two second side walls 114 to enter between the two limiting portions 103. When the cover 11 is placed on the base plate 10, the interaction between the guide surfaces 106 of the limiting portions 103 and the second side walls 114 of the cover 11 enables the cover 11 to enter between the two limiting portions 103, facilitating assembly of the cover 11 with the base plate 10.

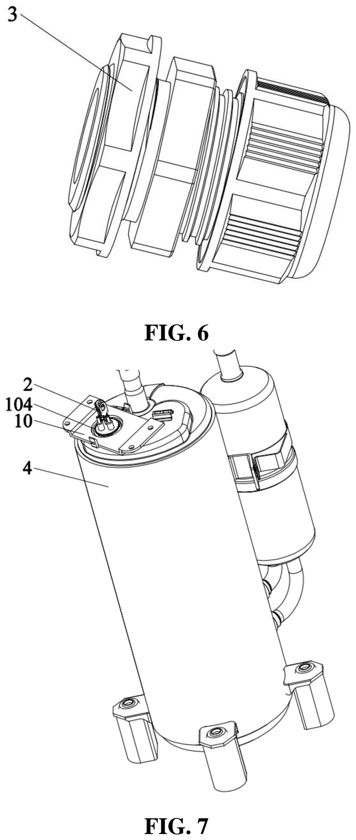

With reference to FIG. 6, one of the two first side walls 113 is provided with a cable connector 3 located above the second connection portion 112. In this embodiment, an opening is disposed on the first side wall 113 on which the cable connector 3 is disposed, one end of the cable connector 3 passing through the opening is provided with an external thread, and the cable connector 3 is fixed to the first side wall 113 by the action of a nut and the external thread. A wire passes through the cable connector 3 after being connected to the terminal post 2, which can improve the waterproof and dustproof performance of the terminal post 2 and the wire. In some other embodiments, the cable connector 3 may also be disposed on the second side wall 114.

With reference to FIG. 1 and FIG. 3, the second connection portion 112 is provided with a clearance groove 116, and a portion of the cable connector 3 is located in the clearance groove 116. By the arrangement of the clearance groove 116 on the second connection portion 112, the space occupied by the cable connector 3 and the second connection portion 112 can be effectively reduced, and the height of the cable connector 3 can be lowered. When the cable connector 3 is fixed to the first side wall 113, the clearance groove 116 ensures that the cable connector 3 does not interfere with the second connection portion 112 and avoids collision or wear between the cable connector 3 and the second connection portion 112.

With reference to FIG. 7, this embodiment also provides a compressor that includes a compressor body 4 and the junction box 1 according to any one of the preceding solutions. The compressor body 4 is provided with a terminal post 2, and the junction box 1 is disposed on the compressor body 4 and is configured to seal the terminal post 2. The compressor may be applied in refrigeration/heat cycle systems such as refrigerators, air conditioners, freezers, heat pump water heaters, dryers, cold dryers, communication industries, and energy storage, as well as in scenarios with high waterproof and dustproof requirements. The arrangement of the junction box 1 can effectively enhance the sealing effect at the position of the terminal post 2 of the compressor.

In this embodiment, an outer periphery of the through hole 104 of the base plate body 101 of the junction box 1 is provided with multiple welding projections, and the base plate body 101 can be conveniently welded to the compressor body 4 through the welding protrusions, which significantly improves the connection stability between the junction box 1 and the compressor body 4. To further enhance the sealing performance at the connection between the through hole 104 of the base plate body 101 and the compressor body 4 and avoid gap leakage, a sealant may also be applied at the connection between the through hole 104 of the base plate body 101 and the compressor body 4.

The installation method of the junction box of the present application is as follows: The through hole 104 of the base plate body 101 is sleeved on the terminal post 2, and the base plate 10 is welded to the compressor body 4 via welding projections on the base plate body 101. Then, the sealing member 12 is placed on the base plate body 101, followed by placing the cover 11 on the sealing member 12. A connecting member is used to fix the horizontal plate 1022 of the first connection portion 102 to the second connection portion 112.

## Claims

1. A junction box, comprising a base plate (10) and a cover (11), wherein
the base plate (10) comprises a base plate body (101), two first connection portions (102) protruding from an upper surface of the base plate body (101) and located at two ends of the base plate body (101) in a first direction, and two limiting portions (103) protruding from the upper surface of the base plate body (101) and located at two ends of the base plate body (101) in a second direction, the two limiting portions (103) are spaced apart from the two first connection portions (102), and the base plate body (101) is provided with a through hole (104) configured to receive a terminal post (2); and
the cover (11) comprises a housing (111) and two second connection portions (112), the housing (111) comprises two first side walls (113) arranged in parallel and spaced apart along the first direction and two second side walls (114) arranged in parallel and spaced apart along the second direction, the two second connection portions (112) are disposed on the two first side walls (113), respectively, the two first side walls (113) are located between the two first connection portions (102), the two second side walls (114) are located between the two limiting portions (103), the two first connection portions (102) are arranged in a one-to-one correspondence with the two second connection portions (112), each first connection portion (102) is connected to a corresponding second connection portion (112), and the first direction and the second direction are arranged at an angle to each other.

2. The junction box according to claim 1, further comprising a sealing member (12) disposed between the base plate body (101) and the housing (111).

3. The junction box according to claim 2, wherein the sealing member (12) comprises a sealing ring (121) and an annular protrusion (122) disposed on an inner edge of the sealing ring (121), the sealing ring (121) is clamped between the housing (111) and the base plate body (101), and the housing (111) is sleeved on the annular protrusion (122) and fits closely with the annular protrusion (122).

4. The junction box according to claim 1, wherein one of a limiting portion (103) and a second side wall (114) is provided with a slot (105), the other of the limiting portion (103) and the second side wall (114) is provided with a protrusion (115), and the slot (105) engages with the protrusion (115).

5. The junction box according to claim 1, wherein the first connection portion (102) comprises a vertical plate (1021) and a horizontal plate (1022), the vertical plate (1021) is disposed on the upper surface of the base plate body (101) and is connected between the horizontal plate (1022) and the base plate body (101), the two first side walls (113) are located between two vertical plates (1021) of the two first connection portions (102), and the two second connection portions (112) are connected to two horizontal plates (1022) of the two first connection portions (102) in a one-to-one correspondence.

6. The junction box according to claim 1, wherein a height of a limiting portion (103) of the two limiting portions (103) is less than a height of the terminal post (2), and a height of the first connection portion (102) is less than the height of the limiting portion (103).

7. The junction box according to claim 1, wherein the two limiting portions (103) are each provided with a guide surface (106), and two guide surfaces (106) of the two limiting portions (103) are configured to guide the two second side walls (114) to enter between the two limiting portions (103), respectively.

8. The junction box according to claim 1, wherein one of the two first side walls (113) is configured to be connected with a cable connector (3).

9. The junction box according to claim 8, wherein a second connection portion (112) of the two second connection portions (112) is provided with a clearance groove (116), and a portion of the cable connector (3) is located in the clearance groove (116).

10. A compressor, comprising a compressor body (4) and the junction box (1) according to any one of claims 1 to 9, wherein the compressor body (4) is provided with a terminal post (2), and the junction box (1) is disposed on the compressor body (4) and is configured to seal the terminal post (2).
